# EUROPÄISCHE PATENTSCHRIFT

(11) **EP 1 882 358 B1**
(45) Veröffentlichungstag und Bekanntmachung des Hinweises auf die Patenterteilung: **24.02.2010**
(21) Anmeldenummer: 06725116.5
(22) Anmeldetag: 16.03.2006
(51) Int. Cl.: H04M 11/04, G08B 25/01, G08B 25/10, H04W 4/00

(54) **VERFAHREN UND VORRICHTUNG ZUR SYNCHRONISATION VON SPRACHE UND DATEN ÜBER LOKALISIERUNGSINFORMATIONEN FÜR ORTSBEZOGENE DIENSTE**
METHOD AND DEVICE FOR SYNCHRONISING SPEECH AND DATA USING LOCATION INFORMATION FOR LOCATION-DEPENDENT SERVICES
PROCEDE ET DISPOSITIF DE SYNCHRONISATION DE VOIX ET DE DONNEES RELATIVES A DES INFORMATIONS DE LOCALISATION POUR DES SERVICES LIES AU SITE

(30) Priorität: 14.04.2005 DE 102005017393
(43) Veröffentlichungstag der Anmeldung: 30.01.2008
(73) Patentinhaber: Deutsche Telekom AG, 53113 Bonn (DE)
(72) Erfinder: EBERSBERGER, Georg, 40589 Düsseldorf (DE)
(74) Vertreter: 2K Patentanwälte Blasberg Kewitz & Reichel
(86) Internationale Anmeldenummer: PCT/EP2006/060813
(87) Internationale Veröffentlichungsnummer: WO 2006/108752

(56) Entgegenhaltungen:
- US-A- 5 630 209
- US-A- 5 826 195

## Beschreibung

Die Erfindung betrifft ein Verfahren und mehrere Vorrichtungen zur Übertragung und zum Empfang von Notrufen durch ein mobiles Gerät über einen Sprachkanal und einen Datenkanal, wobei der Datenkanal zur Übertragung von Ortsinformationen dient.

### Gebiet der Erfindung:

Ein Notruf mit exakten Lokalisierungsinformationen (z. B. von GPS - Global Positioning System) aus einem Mobilfunknetz benutzt einen Datenkanal (z. B. SMS oder GPRS) und einen Sprachkanal, um die gesamte Notrufinformation (z. B. Lokalisierung, Ursache des Notfalls, Identität des Melders) an eine Notrufannahmestelle zu übermitteln. Die über den Datenkanal gelieferten Daten müssen mit dem Sprachkanal synchronisiert werden, damit alle Notrufinformationen zusammen an die Rettungsstelle weitergeleitet werden können. Die Synchronisation von eingehendem Sprachanruf und den Daten (z. B. per SMS) erfolgt heute im Rahmen von ortsbezogenen Diensten über die Rufnummer des Kunden (MSISDN) mit Unterstützung von ACD - Automatic Call Distribution-Anlagen und CTI-Computcr Telephony Integration -Funktionalitäten. Die MSISDN (Rufnummer) ist in den Signalisierungsdaten oder den Daten selbst enthalten. Für die Sprachverbindung wird die MSISDN i. d. R. an die TK Anlage der Dienstzentrale (z. B. Call Center) übertragen, wenn der Kunde die CLIP - Calling Line Identification Presentation - eingeschaltet hat oder die Sprachanbindung der Dienstzentrale über das Feature CLIR Overwrite - Calling Line Identification Restriction - (die unterdrückte CLI wird trotzdem angezeigt) verfügt. Die Synchronisation findet dann in der Weise statt, dass dem System für die Sprachverarbeitung (z. B. der Clientarbeitsplatz eines Call Center Agents) diese MSISDN kenntlich gemacht wird. Die zu diesem Sprachanruf mit dieser MSISDN gehörigen Daten liegen derweil in einer Datenbank mit dem Identifikationsmerkmal MSISDN aus der Datenübertragung vor und können so dem Sprachkanal zugeordnet werden.

Aus der US 5630209 ist ein Notrufsystem bekannt, das vordefinierte Funkkanäle verwendet, über die Notrufinformationen gesendet werden.

Aus der US 5 826 195 ist ein Verfahren bekannt zur Verfolgung von Containern, was auf GPS und GSM Diensten basiert.

### Aufgabe der Erfindung:

Aufgabe der Erfindung ist es, ein Verfahren und eine Vorrichtung bereitzustellen, die eine Synchronisierung von Daten und Sprache für ortsbezogene Dienste sicherstellen.

### Lösung der Aufgabe:

Diese Aufgabe wird durch die Erfindung mit den Merkmalen der unabhängigen Ansprüche gelöst. Vorteilhafte Weiterbildungen der Erfindung sind in den Unteransprüchen gekennzeichnet.

Um Daten und Sprache für ortsbezogene Dienste zuverlässig synchronisieren zu können, wenn die MSISDN des Sprachrufs nicht ermittelt werden kann, werden ersatzweise die Positionsdaten verwendet. Im Rahmen des ortsbezogenen Dienstes wird nach dem Verbindungsaufbau, also bei bestehender Sprachverbindung, die Position (geografische Länge und Breite) des mobilen Endgerätes, z. B. in Form von DTMF Tönen, an die Zentrale (z. B. das Call Center) übertragen. Eine andere Übertragung ist ebenfalls denkbar, die als eine andere Modulation der Phase oder der Amplitude ausgebildet sein kann. Damit wird zumindest eine Positionsinformation redundant übermittelt und der Notfall kann bearbeitet werden, auch wenn der Datenkanal gestört ist. Die exakt gleichen Positionsinformationen sind Bestandteil der Daten, die an die Zentrale gesendet wurden. In der Zentrale werden die DTMF - Dual Ton Multi Frequency - Töne dekodiert und zu der Position umgewandelt. Eine Applikation sucht nun anhand dieser Positionsdaten den dazu passenden Datensatz z. B. aus einer Datenbank heraus. Hierbei ist die Position das identifizierende Merkmal. Eine Unterscheidung zwischen den aktuellen Dienstnutzungen und möglicherweise vorhandenen alten Dienstnutzungen in einer Datenbank erfolgt z. B. über entsprechende Zeitstempel (Eingang der Daten bzw. des Sprachrufs). Um eine eindeutige Identifizierung zu ermöglichen, müssen entweder beide Positionsdatensätze in derselben Genauigkeit angegeben sein oder in einem definierten geringen Abstand zueinander liegen. Es erscheint wenig sinnvoll, zusätzlich zu der Positionsinformation die MSISDN zu übertragen, da dann zuviel Zeit am Anfang des Sprachrufs vergeht, bis der Operator das Gespräch annehmen kann.

Die geographische Position kann entweder durch das mobile Endgerät, also z. B. das Handy, Telematikendgeräte oder die Basisstation ermittelt werden (durch Feilung), wobei entweder das mobile Endgerät oder die Basisstation (oder auch beide) die Positionskoordinaten über den Sprachkanal übermitteln.

Diese Lösung kann sowohl für Call Center gestützte Dienste als auch für automatisierte Dienste ohne Call Center Agents genutzt werden.

Hierdurch werden die Nachteile des Standes der Technik überwunden. Der Stand der Technik hat den Nachteil, dass die Übertragung der CLI des Kundentelefons nicht immer gewährleistet werden kann, da er diese am Gerät ausstellen kann. Das CLIR Overwrite, als mögliche Rückfallposition, wird nicht für alle Dienste aus datenschutzrechtlichen Aspekten gewährt und ist im internationalen Roaming auch technisch nicht sichergestellt. Das kann dazu führen, dass die Erbringung des Dienstes nicht in der gewünschten Qualität möglich ist.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigen:
- Fig. 1: einen Ablauf gemäß des Standes der Technik;
- Fig. 2: einen Ablaufplan des erfindungsgemäßen Verfahrens.

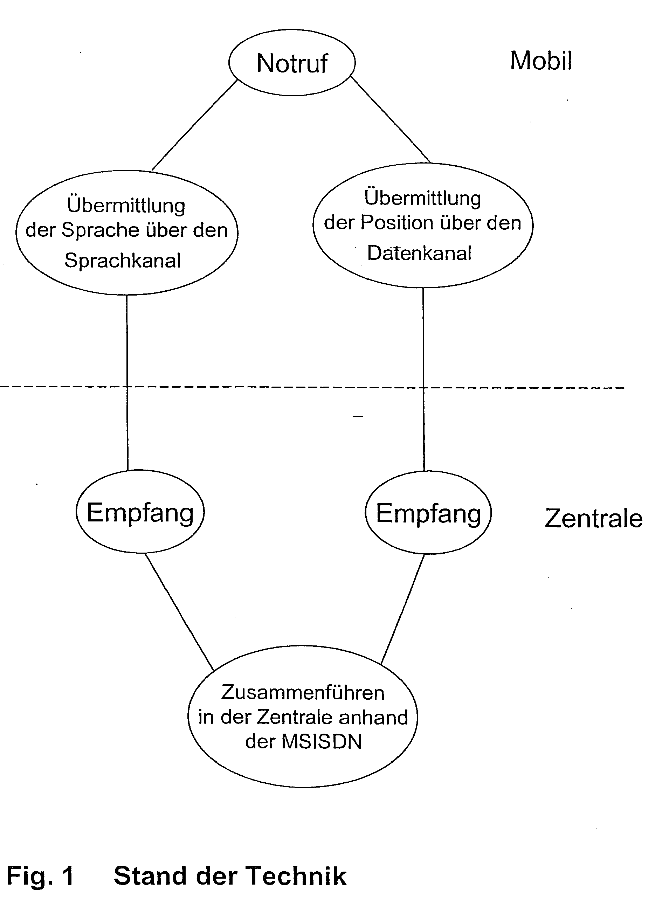

Der in Figur 1 dargestellte Ablauf beschreibt das Verfahren, wie es aus dem Stand der Technik bekannt ist, wobei der Notruf aufgeteilt wird in eine Übermittlung der Position über den Datenkanal und eine Übermittlung der Sprachinformationen über den Sprachkanal. Nach dem Empfang durch die Zentrale werden die Informationen auf der Basis der Rufkennung beziehungsweise der Telefonnummer zusammengeführt. Dies setzt jedoch voraus, dass keinerlei Informationen verloren gehen.

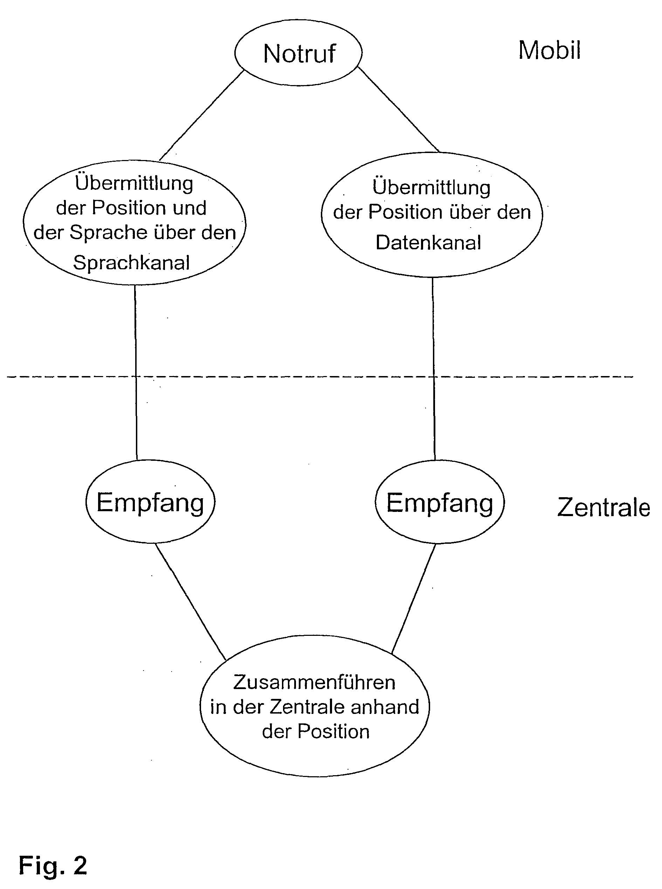

Die Figur 2 zeigt hingegen eine Abwandlung der vorliegenden Erfindung, bei der die Position sowohl über den Datenkanal als auch über den Sprachkanal übertragen wird. In der Zentrale werden die Informationen an Hand der Position beziehungsweise der Koordinaten zusammengeführt. Somit wird sichergestellt, dass die Informationen redundant sind und zusätzlich auch noch Übertragungsfehler oder Ungenauigkeiten abgefangen werden können.

Im Rahmen der Erfindung sind zahlreiche Abwandlungen und Weiterbildungen der beschriebenen Ausführungsbeispiele verwirklichbar. Die bevorzugten Ausführungsformen sollen keine Beschränkung darstellen. Vielmehr ist der Schutzumfang nach den Ansprüche zu bemessen.

## Patentansprüche

1. Verfahren zur Übertragung von Notrufen durch ein mobiles Gerät über einen Sprachkanal und einen Datenkanal, wobei der Datenkanal zur Übertragung von Ortsinformationen dient, **dadurch gekennzeichnet, daß** auch über den Sprachkanal die Ortsinformationen kodiert übermittelt werden und daß die Ortsinformationen, die über den Sprachkanal übertragen wurden, mit den Ortsinformationen, die über den Datenkanal übertragen wurden, bei einem Empfänger verglichen werden.

2. Verfahren nach dem vorhergehenden Anspruch, wobei die Ortsinformationen in Form von DTMF Tönen übertragen werden.

3. Verfahren nach einem oder mehreren der vorhergehenden Ansprüche, wobei die Ortsinformationen zu Beginn der Verbindung übertragen werden.

4. Verfahren nach einem oder mehreren der vorhergehenden Ansprüche, wobei die Ortsinformationen durch die Basisstation bestimmt werden, an der das mobile Endgerät angemeldet ist, um die Informationen dann über den Sprachkanal zu übermitteln.

5. Verfahren nach einem oder mehreren der vorhergehenden Ansprüche, wobei die Ortsinformationen durch einen GPS-Empfänger bestimmt werden, der in Wirkverbindung mit dem mobilen Endgerät steht.

6. Verfahren nach dem vorhergehenden Anspruch, wobei der Vergleich auf der Basis des vergleichs der geographischen Koordinaten erfolgt.

7. Verfahren nach einem oder mehreren der vorhergehenden zwei Ansprüche, wobei der Vergleich nur für Ortsinformationen erfolgt, die innerhalb eines vorgegebenen Intervalls eingetroffen sind.

8. Verfahren nach einem oder mehreren der vorhergehenden drei Ansprüche, wobei die Koordinaten nur eine Abweichung innerhalb einer vorgegebenen Toleranz aufweisen dürfen.

9. vorrichtung zur Übertragung von Notrufen, wobei die Vorrichtung Mittel und eine Einrichtung enthält; um Informationen über einen Sprachkanal und einen Datenkanal zu übertragen, **dadurch gekennzeichnet, daß** die Mittel den Datenkanal und den Sprachkanal zur Übertragung von Ortsinformationen verwenden, die Mittel und daß so ausgebildet und eingerichtet sind, über den Sprachkanal die Ortsinformationen kodiert zu übermitteln.

10. Vorrichtung nach dem vorhergehenden Vorrichtungsanspruch, wobei Mittel vorhanden sind und eingerichtet sind, um die Ortsinformationen in Form von DTMF Tönen zu übertragen.

11. Vorrichtung nach einem oder mehreren der vorhergehenden Vorrichtungsansprüche, wobei die Mittel so ausgebildet und eingerichtet sind, die Ortsinformationen zu Beginn der Verbindung zu übertragen.

12. Vorrichtung nach einem oder mehreren der vorhergehenden Vorrichtungsansprüche, wobei die Vorrichtung eine Basisstation ist, an der ein mobiles Endgerät angemeldet ist, um die Informationen dann über den Sprachkanal zu übermitteln.

13. Vorrichtung nach einem oder mehreren der vorhergehenden Vorrichtungsansprüche, wobei die Vorrichtung ein mobiles Endgerät ist, das Mittel aufweist, um die Ortsinformationen zu ermitteln.

14. Vorrichtung nach dem vorhergehenden Vorrichtungsanspruch, wobei die Vorrichtung ein mobiles Endgerät ist, und wobei die Ortsinformationen durch einen GPS-Empfänger bestimmt werden, der in Wirkverbindung mit dem mobilen Endgerät steht.

15. Empfangsvorrichtung zum Empfangen von Notrufen, wobei die Empfangsvorrichtung Mittel und eine Einrichtung enthält, um Informationen über einen Sprachkanal und einen Datenkanal zu empfangen, **dadurch gekennzeichnet, daß** die Mittel den Datenkanal und den Sprachkanal zum Empfang von Ortsinformationen verwenden und daß die Mittel so eingerichtet und ausgebildet sind, die Ortsinformationen sowohl über den Datenkanal als auch auszuwerten über den Sprachkanal auszuwerten.

16. Empfangsvorrichtung nach dem vorhergehenden Empfangsvorrichtungsanspruch, wobei die Empfangsvorrichtung Mittel enthält, um die Ortsinformationen, die über den Sprachkanal übertragen wurden, mit den Ortsinformationen, die über den Datenkanal übertragen wurden, zu vergleichen.

17. Empfangsvorrichtung nach dem vorhergehenden Anspruch, wobei der Vergleich auf der Basis des vergleichs der geographischen Koordinaten erfolgt.

18. Empfangsvorrichtung nach einem oder mehreren der vorhergehenden zwei Ansprüche, wobei der Vergleich nur für Ortsinformationen erfolgt, die innerhalb eines vorgegeben Zeitintervalls eingetroffen sind.

19. Empfangsvorrichtung nach einem oder mehreren der vorhergehenden drei Ansprüche, wobei die Koordinaten nur eine Abweichung innerhalb einer vorgegebenen Toleranz aufweisen dürfen.

20. Datenträger, auf dem eine Software gespeichert ist, die dazu ausgebildet ist, ein Verfahren zur Übertragung von Notrufen durch ein mobiles Gerät über einen Sprachkanal und einen Datenkanal gemäß einem der Ansprüche 1-8 durchzuführen, wenn die Software auf einem Computer ausgeführt wird.

## Claims

1. Method for transmitting emergency calls using a mobile device through a voice channel and a data channel, wherein the data channel serves to transmit location information, **characterized in that** the location information is also transmitted in encoded form through the voice channel, and **in that** the location information that has been transmitted through the voice channel is compared at a receiver with the location information that has been transmitted through the data channel.

2. Method according to the preceding claim, wherein the location information is transmitted in the form of DTMF tones.

3. Method according to one or more of the preceding claims, wherein the location information is transmitted at the start of the connection.

4. Method according to one or more of the preceding claims, wherein the location information is determined by the base station at which the mobile terminal device is registered, in order to then transmit the information through the voice channel.

5. Method according to one or more of the preceding claims, wherein the location information is determined by a GPS receiver standing in operative connection with the mobile terminal device.

6. Method according to the preceding claim, wherein the comparison is made on the basis of a comparison of the geographical coordinates.

7. Method according to one or more of the preceding two claims, wherein the comparison is made only for location information that has arrived within a predetermined interval.

8. Method according to one or more of the preceding three claims, wherein the coordinates are allowed to have a deviation only within a predetermined tolerance.

9. Device for transmitting emergency calls, wherein the device contains means and an apparatus for transmitting information through a voice channel and a data channel, **characterized in that** the means use the data channel and voice channel for transmitting location information, and **in that** the means are designed and arranged so as to transmit the location information in encoded form through the voice channel.

10. Device according to the preceding device claim, wherein means are present and arranged in order to transmit the location information in the form of DTMF tones.

11. Device according to one or more of the preceding device claims, wherein the means are designed and arranged so as to transmit the location information at the start of the connection.

12. Device according to one or more of the preceding device claims, wherein the device is a base station at which a mobile terminal device is registered, in order to then transmit the information through the voice channel.

13. Device according to one or more of the preceding device claims, wherein the device is a mobile terminal device that has means for establishing the location information.

14. Device according to the preceding device claim, wherein the device is a mobile terminal device, and wherein the location information is determined by a GPS receiver standing in operative connection with the mobile terminal device.

15. Receiving device for receiving emergency calls, wherein the receiving device contains means and an apparatus in order to receive information through a voice channel and a data channel, **characterized in that** the means use the data channel and the voice channel to receive location information, and **in that** the means are arranged and designed to evaluate the location information through the data channel as well as the voice channel.

16. Receiving device according to the preceding receiving device claim, wherein the receiving device contains means in order to compare the location information that has been transmitted through the voice channel with the location information that has been transmitted through the data channel.

17. Receiving device according to the preceding claim, wherein the comparison is made on the basis of the comparison of geographical coordinates.

18. Receiving device according to one or more of the preceding two claims, wherein the comparison is made only for location information that has arrived within a predetermined time interval.

19. Receiving device according to one or more of the preceding three claims, wherein the coordinates are allowed to have a deviation only within a predetermined tolerance.

20. Data medium on which is stored software designed to carry out a method for transmitting emergency calls using a mobile device through a voice channel and a data channel according to any one of claims 1 - 8 when the software is executed on a computer.

## Revendications

1. Procédé de transmission d'appels d'urgence par un appareil mobile par l'intermédiaire d'un canal vocal et d'un canal de données, le canal de données servant à la transmission d'informations de localisation, **caractérisé en ce que** les informations de localisation sont transmises codées également lorsqu'elles sont transmises par l'intermédiaire du canal vocal, et **en ce que** les informations de localisation transmises par l'intermédiaire du canal vocal sont comparées, au niveau d'un récepteur, aux informations de localisation transmises par l'intermédiaire du canal de données.

2. Procédé selon la revendication précédente dans lequel les informations de localisation sont transmises sous la forme de sons DTMF.

3. Procédé selon l'une ou plusieurs des revendications précédentes dans lequel les informations de localisation sont transmises au début de la communication.

4. Procédé selon l'une ou plusieurs des revendications précédentes dans lequel les informations de localisation sont déterminées par la station de base à laquelle est connecté le terminal mobile pour transmettre ensuite les informations par l'intermédiaire du canal vocal.

5. Procédé selon l'une ou plusieurs des revendications précédentes dans lequel les informations de localisation sont déterminées par un récepteur GPS qui est en liaison active avec le terminal mobile.

6. Procédé selon la revendication précédente dans lequel la comparaison est réalisée sur la base de la comparaison des coordonnées géographiques.

7. Procédé selon l'une ou plusieurs des deux revendications précédentes dans lequel la comparaison n'est réalisée que pour les informations de localisation arrivées à l'intérieur d'un intervalle prédéfini.

8. Procédé selon l'une ou plusieurs des trois revendications précédentes dans lequel les coordonnées ne doivent présenter qu'un seul écart à l'intérieur d'une tolérance prédéfinie.

9. Dispositif de transmission d'appels d'urgence, le dispositif comportant des moyens et un agencement destinés à transmettre des informations par l'intermédiaire d'un canal vocal et d'un canal de données, **caractérisé en ce que** les moyens utilisent le canal de données et le canal vocal pour la transmission d'informations de localisation, et **en ce que** les moyens sont conçus et agencés de manière à transmettre codées les informations de localisation par l'intermédiaire du canal vocal.

10. Dispositif selon la revendication de dispositif précédente dans lequel des moyens sont présents et agencés pour transmettre les informations de localisation sous la forme de sons DTMF.

11. Dispositif selon l'une ou plusieurs des revendications de dispositif précédentes, dans lequel les moyens sont conçus et agencés de manière à transmettre les informations de localisation au début de la communication.

12. Dispositif selon l'une ou plusieurs des revendications de dispositif précédentes dans lequel le dispositif est une station de base à laquelle est connecté un terminal mobile pour transmettre ensuite les informations par l'intermédiaire du canal vocal.

13. Dispositif selon l'une ou plusieurs des revendications de dispositif précédentes, dans lequel le dispositif est un terminal mobile qui présente des moyens destinés à rechercher les informations de localisation.

14. Dispositif selon la revendication de dispositif précédente dans lequel le dispositif est un terminal mobile et dans lequel les informations de localisation sont déterminées par un récepteur GPS qui est en liaison active avec le terminal mobile.

15. Dispositif de réception destiné à recevoir des appels d'urgence, le dispositif de réception comportant des moyens et un agencement pour la réception d'informations par l'intermédiaire d'un canal vocal et d'un canal de données, **caractérisé en ce que** les moyens utilisent le canal de données et le canal vocal pour la réception d'informations de localisation, et **en ce que** les moyens sont agencés et conçus de manière à analyser les informations de localisation tant par l'intermédiaire du canal de données que par l'intermédiaire du canal vocal.

16. Dispositif de réception selon la revendication de dispositif de réception précédente, le dispositif de réception comportant des moyens pour la comparaison des informations de localisation transmises par l'intermédiaire du canal vocal aux informations de localisation transmises par l'intermédiaire du canal de données.

17. Dispositif de réception selon la revendication précédente, la comparaison étant réalisée sur la base de la comparaison des coordonnées géographiques.

18. Dispositif de réception selon l'une ou plusieurs des deux revendications précédentes, la comparaison n'étant réalisée que pour les informations de localisation arrivées à l'intérieur d'un intervalle de temps prédéfini.

19. Dispositif de réception selon l'une ou plusieurs des trois revendications précédentes, les coordonnées ne devant présenter qu'un seul écart à l'intérieur d'une tolérance prédéfinie.

20. Support de données sur lequel est stocké un logiciel conçu de manière à pouvoir mettre en oeuvre un procédé de transmission d'appels d'urgence par un appareil mobile par l'intermédiaire d'un canal vocal et d'un canal de données selon l'une des revendications 1 à 8, lorsque le logiciel est exécuté sur un ordinateur.
